# EUROPEAN PATENT SPECIFICATION

(11) **EP 4 265 463 B1**
(45) Date of publication and mention of the grant of the patent: **31.12.2025**
(21) Application number: 22168830.2
(22) Date of filing: 19.04.2022
(51) Int. Cl.: B60K 35/233, B60K 35/235, B60K 35/28, B60K 35/29, B60K 35/81, G02B 27/01

(54) **VEHICLE, HEAD-UP DISPLAY, AUGMENTED REALITY DEVICE, APPARATUSES, METHODS AND COMPUTER PROGRAMS FOR CONTROLLING AN AUGMENTED REALITY DEVICE AND FOR CONTROLLING A VISUALIZATION DEVICE**
FAHRZEUG, HEAD-UP-ANZEIGE, VORRICHTUNG FÜR ERWEITERTE REALITÄT, GERÄTE, VERFAHREN UND COMPUTERPROGRAMME ZUR STEUERUNG EINER VORRICHTUNG FÜR ERWEITERTE REALITÄT UND ZUR STEUERUNG EINER VISUALISIERUNGSVORRICHTUNG
VÉHICULE, AFFICHAGE TÊTE HAUTE, DISPOSITIF DE RÉALITÉ AUGMENTÉE, APPAREILS, PROCÉDÉS ET PROGRAMMES INFORMATIQUES POUR COMMANDER UN DISPOSITIF DE RÉALITÉ AUGMENTÉE ET POUR COMMANDER UN DISPOSITIF DE VISUALISATION

(43) Date of publication of application: 25.10.2023
(73) Proprietor: VOLKSWAGEN AG, 38440 Wolfsburg (DE); Seat, S.A., 08760 Martorell (ES)
(72) Inventor: HAAR, Adrian, 30173 Hannover (DE); MORALES FERNANDEZ, Daniel, 08012 Barcelona (ES)
(74) Representative: 2SPL Patentanwälte PartG mbB

(56) References cited:
- WO-A1-2020/105685
- DE-A1- 102017 202 115
- DE-A1- 102017 216 775
- US-A1- 2014 267 263
- US-A1- 2019 178 669
- US-A1- 2020 406 754

## Description

The present invention relates to the field of augmented reality. Embodiments relate to a vehicle, a head-up display, an augmented reality device, an apparatus, a method and a computer program for controlling an augmented reality device and for controlling a visualization device, more particularly, but not exclusively, to a concept for supplementing information displayed by a visualization device in a vehicle using augmented reality.

Head-up displays (HUD) are used to display information for a driver of a vehicle. For example, a current speed of the vehicle is projected into the windshield of a vehicle. So the driver of the vehicle can read the current speed without having to look away from the traffic scenery in front of the vehicle. Some of these HUD systems also determine objects or features from the environment to which additional information can be added, e.g. they can be highlighted on the windshield. Examples are pedestrians, children, bicycles and other traffic participants, which require special attention. Such additional information underlies the limits of the HUD system, e.g. a limited projection area is available due to constructional limits of the HUD projector.

Document US 10,885,819 B1 describes a system for displaying visual information to a user of a vehicle, which includes a projection system included in the vehicle and configured to project a first visual output onto a first projection surface of a head-mounted device of the user to cause at least a first portion of the visual information to be displayed to a first eye of the user. The system comprises a position-tracking system included in the vehicle and configured to determine a location of the head-mounted device with respect to the projection system and an orientation of the head-mounted device with respect to the projection system. A processor is configured to execute instructions to cause the projection system to project the first visual output to the first projection surface based on the position and the orientation. Document US 2017/0161949 A1 describes a method of displaying augmented reality images as captured by a primary image capture device. An image is captured exterior of a vehicle by the primary image capture device, the primary image capture device capturing an image of a driver's side adjacent lane. The method comprises determining, by a processor, a size of the primary augmented reality image to be displayed to the driver and generating a primary augmented reality image displayed on a driver side image plane at a depth exterior of the vehicle. The primary augmented reality image generated on the driver side image plane is at a respective distance from the driver side window.

Document US 2014/0267263 A1 describes a method, an augmented reality driving system and a device, which safely guide a vehicle driver to perform a left turn. A vehicle navigator detects a left turn based upon proximity and speed for a vehicle. A target sensor determines a current position and a relative vector for an oncoming vehicle in a lane for opposing traffic that is approaching the left turn. An augmented reality controller three dimensionally maps a forward view including the oncoming vehicle and spatially overlays an augmented reality display on a volumetric heads-up display for a driver of the vehicle by projecting a target path of the oncoming vehicle based upon the vector, a relative vector and a left turn path.

Document US 2019/0178669 A1 discloses a content visualizing device and method that changes positions and shapes of route guidance content and driving related content based on a distance to an adjacent object, a current driving state, and an occurrence of a driving related event.

Document WO 2020/105685 A1 is about a concept, which makes an actual view in front of a driver's field of view, and an image displayed while overlapping the actual view more easily visible. A display control device which controls an image display unit for displaying an image in a region that overlaps a foreground when viewed from a driver of a vehicle displays a first information image and a second information image on the image display unit, detects the line-of-sight direction of the driver of the vehicle, when the first information image is determined to be visually recognized, decreases the visibility thereof, and when the second information image is determined to be visually recognized, prevents the visibility thereof from becoming lower than that of the first information image.

Document DE 10 2017 202 115 A1 describes that on the basis of information detected from a peripheral situation, section and information are detected from an automatic driving support section, a display control section generates image data in which marks for driving support of an own vehicle are drawn so as to be superposed on a forward situation diagram that shows a situation at a front side. Further, from information detected by an eye detecting section and from the image data, the display control section sets a vanishing point in accordance with a height position of eyes and computes a display image. Moreover, on the basis of the information detected by the eye detecting section, the display control section causes a display image to be displayed on the front windshield glass by a HUD such that the vanishing point is set in accordance with the height position of the eyes.

Document DE 10 2017 216 775 A1 discloses a method, an apparatus, and a computer-readable storage medium having instructions to control a display of an augmented reality head-up display device for a motor vehicle. In a first step, a pose of the motor vehicle relative to a map is determined. Subsequently, at least one reference point is extracted from the map, wherein the at least one reference point originates from a surface in a visual range of a driver of the motor vehicle. After a transformation of the at least one reference point in vehicle coordinates, a virtual object for display by the augmented reality head-up display device is generated taking into account the at least one transformed reference point. The virtual object is finally output for display by the augmented reality head-up display device.

In view of the conventional concepts there is a demand for an improved concept for organizing information displayed to a driver of a vehicle. This demand is met according to the appended independent claims.

Embodiments are based on the finding that information displayed by multiple visualization devices can be coordinated. For example, information visualized by a HUD system with a limited field of view (FoV) may be complemented or supplemented by information visualized by an augmented reality device. Additional information may be arranged in line with the information of the HUD-system. It is a finding that by communicating information on the visualization between devices or by centrally coordinating such information, a coordinated augmented reality environment can be generated for a driver of a vehicle.

Embodiments provide a method for controlling an augmented reality device and for visualizing of information for a driver of a vehicle. The method comprises obtaining information on first information to be visualized by a visualization device and supplementing the first information to be visualized with second information to be visualized by the augmented reality device. That way, the augmented reality device can be used to overlay or add information to a field of view of the visualization device.

For example, the visualization device has a first visualization field in which it is configured to visualize information and the second information to be visualized is configured to be visualized outside the first visualization field. That way, a field of view for a user may be extended using the second information.

In some embodiments the supplementing may comprise configuring the second information to fulfill a preconfigured geometrical relation to visualized first information. Therewith, different ways of overlaying or visually extending the first information may be enabled.

The method may further comprise receiving information on a position of the augmented reality device and the supplementing may further comprise adapting the second information to be visualized based on the information on the position of the augmented reality device. Thereby, the second information to be visualized can be dynamically adapted to the position of the augmented reality device. For example, the augmented reality device is implemented in glasses wearable by a driver of the vehicle. The adaptation of the second information based on the position of the augmented reality device may lead to a static visual representation of the first and second information from a user's perspective.

In further embodiments the method may comprise determining information on a gaze of the user and adapting the first and/or or second information to be visualized to the information on the gaze of the user. That way, the visualized information may be gaze dependent, e.g. depending on the gaze of the user certain visualized objects may be highlighted or not.

Moreover, the method may comprise providing the second information to be visualized to the visualization device. The visualization may be adaptive on both sides at the visualization device and at the augmented reality device.

The method may further comprise coordinating the first and second information to be visualized by controlling the augmented reality device and the visualization device.

Embodiments also provide a method for controlling a visualization device and for visualizing information for a driver of a vehicle. The method comprises obtaining first information to be visualized for the driver and providing information on the first information to be visualized for controlling an augmented reality device. That way, the augmented reality device is enabled to adapt the second visualization to the first information.

In further embodiments the method may further comprise receiving information on second information to be visualized from controlling of the augmented reality device and coordinating the first and second information to be visualized. Thereby, the first and second information may be coordinated or controlled by the visualization device.

The method may further comprise visualizing the first and/or the second information to be visualized. That way the full information may be visualized for the driver.

Embodiments also provide a computer program having a program code for performing a method as described herein, when the computer program is executed on a computer, a processor, or a programmable hardware component.

A further embodiment is an apparatus, comprising one or more interfaces, which are configured to communicate with one or more visualization devices and processing circuitry, which is configured to control the one or more interfaces and to perform a method as described herein.

Further embodiments are an augmented reality device and/or a head-up display, which comprises an apparatus as described herein. Yet another embodiment is a vehicle comprising an embodiment of the apparatus, visualization device, head-up display, and/or augmented reality device.

Some examples of apparatuses and/or methods will be described in the following by way of example only, and with reference to the accompanying figures, in which
Fig. 1 shows a block diagram of an embodiment of a method for controlling an augmented reality device and for visualizing of information for a driver of a vehicle;
Fig. 2 shows a block diagram of an embodiment of a method for controlling a visualization device and for visualizing information for a driver of a vehicle;
Fig. 3 shows a block diagram of an example of an apparatus and an embodiment of a visualization device comprising the apparatus;
Fig. 4 shows an example of a limited field of view of a HUD system;
Fig. 5 shows another example of a limited field of view of a HUD system;
Fig. 6 shows yet another example of a limited field of view of a HUD system; and
Fig. 7 shows an embodiment in which a limited field of view of a HUD system is supplemented by an augmented reality device.

Some embodiments are now described in more detail with reference to the enclosed figures. However, other possible embodiments are not limited to the features of these embodiments described in detail. Other embodiments may include modifications of the features as well as equivalents and alternatives to the features. Furthermore, the terminology used herein to describe certain embodiments should not be restrictive of further possible embodiments.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, e.g., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

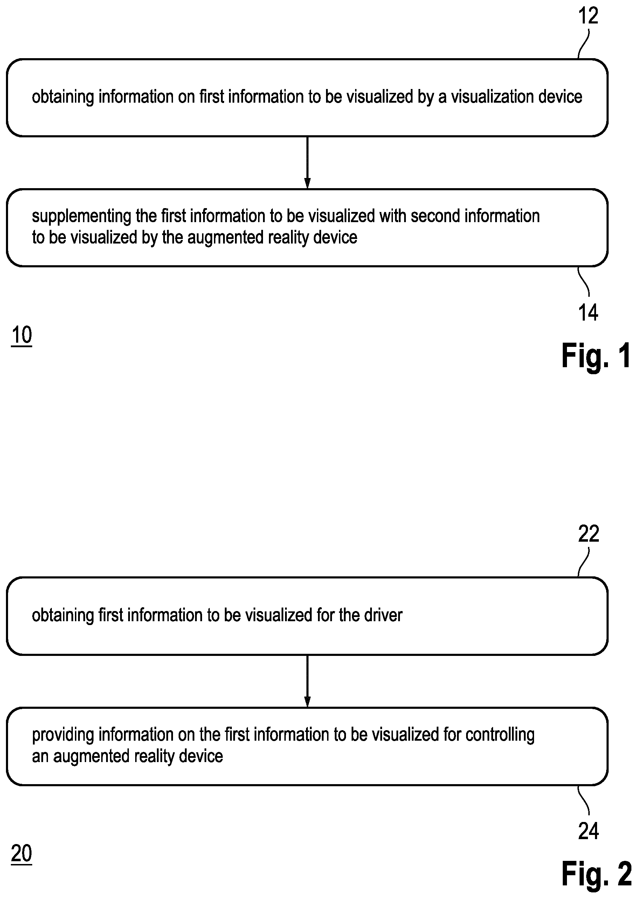

Fig. 1 shows a block diagram of an embodiment of a method 10 for controlling an augmented reality device and for visualizing of information for a driver of a vehicle. The method 10 comprises obtaining 12 information on first information to be visualized by a visualization device. The method 10 further comprises supplementing 14 the first information to be visualized with second information to be visualized by the augmented reality device. The obtaining 12 of the information may comprise receiving said information from the visualization device from a controller for the entire visualized information. In some embodiments the augmented reality device may obtain the information by monitoring the visualization of the first information, e.g. using an image capture device such as a camera. The supplementing 14 may comprise complementing, overlaying, adding or arranging the second information based on the first information in a way that the first and second information can combine and be visualized together.

The visualization device may be a head-up display or a projector, which is installed in the vehicle to display the first information. As such, the visualization device may also be an augmented reality device, e.g. in terms of classes or a projector, which is configured to project information, e.g. graphics or text, on the windshield/windscreen or any other surface inside the vehicle for the driver.

Fig. 2 shows a block diagram of an embodiment of a method 20 for controlling a visualization device and for visualizing information for a driver of a vehicle. The method 20 comprises obtaining 22 first information to be visualized for the driver. The method 20 further comprises providing 24 information on the first information to be visualized for controlling an augmented reality device. In line with the above, the visualization device may transmit or forward the first information to the augmented reality device.

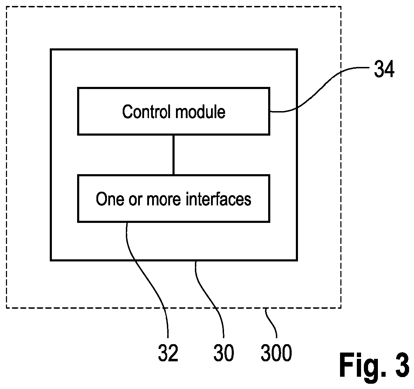

Fig. 3 shows a block diagram of an example of an apparatus 30 and an embodiment of a visualization device 300 comprising an embodiment of the apparatus 30. The apparatus 30 comprises one or more interfaces 32, which are configured to communicate with one or more visualization devices. The apparatus 30 further comprises processing circuitry 34, which is configured to control the one or more interfaces 32 and to perform a method 10, 20 as described herein. As further indicated in dotted lines in Fig. 3, a device 300 comprising the apparatus 30 is a further embodiment, e.g. an augmented reality device, a head-up display or a vehicle.

The one or more interfaces 32 may be implemented as any means for communicating information, e.g. transmitting, receiving, or transmitting and receiving. For example, the one or more interfaces 32 may correspond to one or more contacts, inputs/outputs, and/or modules to communicate physical signals. The one or more interfaces 32 may comprise a software interface/module and/or an interface to a transmission medium. The one or more interfaces 32 may be configured to take as input and/or provide as output any data that is processed by the processing circuitry 34. The one or more interfaces 32 may enable communication with components of the vehicle or device, e.g. a key, a modem, a server storing information about the vehicle/device, display of the vehicle/device, graphic processor of the vehicle/device, etc.

As further shown in Fig. 3 the respective one or more interfaces 32 are coupled to the processing circuitry 34, which may comprise one or more processors, and which controls the one or more interfaces 32. In examples, the processing circuitry 34 may be implemented using one or more processing units, one or more processing devices, any means for processing, such as a processor, processing circuits, a computer or a programmable hardware component being operable with accordingly adapted software. In other words, the described function of the processing circuitry may as well be implemented in software, which is then executed on one or more programmable hardware components. Such hardware components may comprise a general-purpose processor, a Digital Signal Processor (DSP), a micro-controller, central processing unit (CPU), etc.

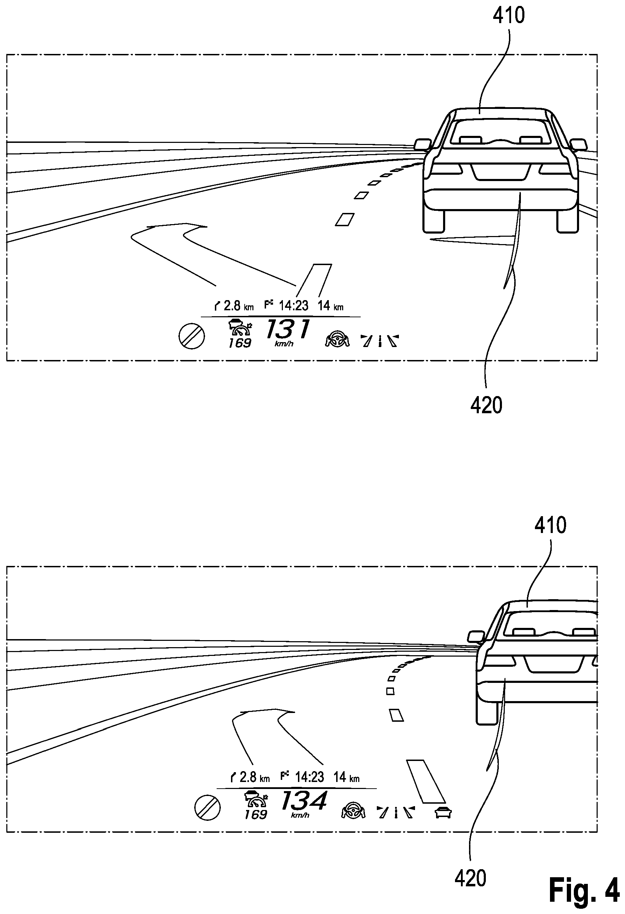

Fig. 4 shows an example of a limited field of view of a HUD system. Fig. 4 shows a driver's perspective in a car through the windshield. The HUD system projects information, such as speed, speed limit, navigational data, etc. onto the windshield. The projection, however, has a limited field of view, such that a marker for a car 410 driving ahead of the ego car, in this example, generates an artefact 420 at the frame boundary of the field of view. Fig. 4 illustrates a maneuver in which the ego car passes or overtakes the car 410 in the right lane. At the top, the ego car is just before the lane change and at the bottom the ego cat has changed lanes from right to left. The marker 420 for the car 410 therefore would have to change its relative position in the windshield and moves to the right, even closer to the boundary of the projection area or field of view of the HUD system.

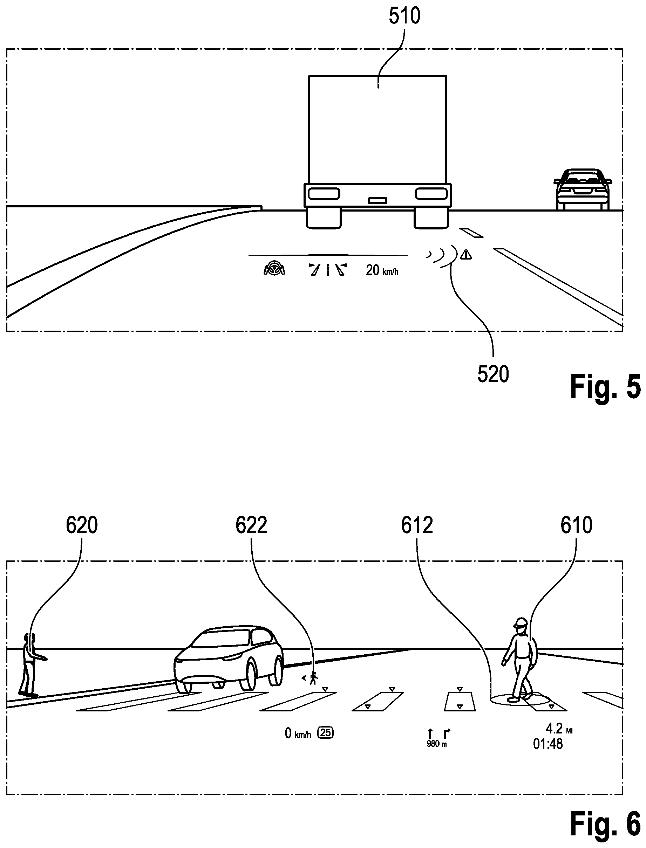

Fig. 5 shows another example of a limited field of view of a HUD system. Fig. 5 shows a driver's perspective through a windshield of the ego car. A HUD system projects information onto the windshield. In this example a truck 510 parks ahead and blocks the lane. The ego vehicle therefor needs to change lanes to the right. A warning icon 520 is shown at the very right border of the projection area or field of view, indicating that there is some danger or special attention required on the right. Since the projection area is limited the warning icon is displayed or projected onto the left lane but actually refers to the right lane.

Fig. 6 shows yet another example of a limited field of view of a HUD system. Again, a driver's perspective through a windshield of an ego car is shown. In the traffic scene there are two pedestrians 610 and 620. One Pedestrian 610 is within the projection area of the HUD system and a warning circle 612 is projected onto the scene, to draw the driver's attention. However, the other pedestrian 620 is located outside the projection area of the HUD. Since the HUD system cannot circle the other pedestrian a warning icon 622 is shown at the very left boundary of the projection area to indicate to the driver that there is another pedestrian somewhere on the left. In an embodiment an augmented reality device can be used to project another circle onto pedestrian 620 to supplement the HUD's information.

Conventional HUD-systems have a limited field of view (FoV). Especially in the context of augmented reality (AR), this can lead to a limitation in the features available to the user. Such limitations are shown in Figs. 4, 5 and 6. Often, non-AR solutions need to be found to help the understanding of the user that elements just left the usable field of view of the display, e.g. Figs. 5 and 6. Abstract icons 520, 622 are used on the edge of the FoV of view to hint at elements that left the FoV or lie outside the FoV. Conventional systems may only work within the usable FoV of an AR-HUD system.

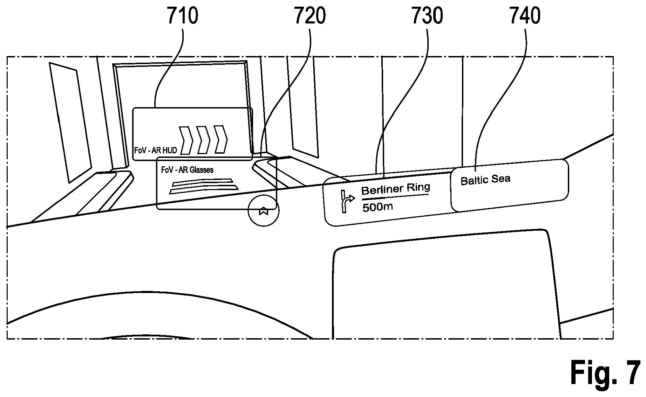

Fig. 7 shows an embodiment in which a limited Fov 710 of a HUD system is supplemented by an augmented reality device. For example, the augmented reality device corresponds to glasses a driver of the ego car wears. The glasses are used to project additional information into the area 720 of the field of view of the driver. In this example navigational information is displayed by the HUD-system in the area 710 indicating that the car would have to turn right at the point the arrows to the right are shown. However, in order to get to this point, the car has to move forward first. This information is indicated by the upward arrows 720, however, their position in the scene lies outside the projection area of the HUD system. Hence, the augmented reality device is used to display this information in the scene. The augmented reality device can further be used to display other information such as the navigational information 730 or other information 740. In further embodiments the augmented reality device may as well be a projector projecting information into the scene in addition to the HUD.

In the embodiment shown in Fig. 7 the visualization device (HUD system) has a first visualization field 710 in which it is configured to visualize information and the second information to be visualized is configured to be visualized outside the first visualization field, more specifically in field 720. Moreover, the supplementing 14 of the first information comprises configuring the second information to fulfill a preconfigured geometrical relation to visualize first information 710. In the present embodiment the first information is indicated by the arrows to the right 710 and the second information is indicated by the arrow to go straight 720. The preconfigured geometrical relation is to display the arrow to go straight 710 underneath the arrows to go right 720, as going straight should happen first. In further embodiments, other geometrical relations a conceivable, e.g. supplemental information is displayed on to or on a side of the second information.

For example, the method 10 for the augmented reality device may comprise receiving information on a position of the augmented reality device and the supplementing 14 may comprise adapting the second information to be visualized based on the information on the position of the augmented reality device. That way, if the driver turns his head the perceived scene including the second visualized information can be kept static. In further embodiments, the method 10 may further comprise determining information on a gaze of the user and adapting the first and/or or second information to be visualized to the information on the gaze of the user. That way information displayed may be adapted to the field of view of the driver and may accordingly change its relative position depending on the gaze of the driver.

In embodiments, different options are conceivable on how the visualization device and the augmented reality device are controlled or coordinated. In principle, four options are conceivable, the visualization device coordinates the information to be visualized, the augmented reality device coordinates the information to be visualized, a central controller coordinates the information to be visualized or the coordination is implemented in a distributed fashion. For example, the method 10 further comprises providing the second information to be visualized to the visualization device. At the visualization device the method 20 may then further comprise receiving the information on the second information to be visualized from controlling of the augmented reality device. The coordinating the first and second information to be visualized may happen at the visualization device.

The visualization device may then coordinate the first and second information. Another option is that the method 10 comprises coordinating the first and second information to be visualized by controlling the augmented reality device and the visualization device. That way, the augmented reality device may coordinate the visualization. As indicated in Fig. 7, both methods 10, 20 may comprise visualizing the first and/or the second information to be visualized, e.g. by communicating the respective information between the visualization device and the augmented reality device.

Embodiments may enable an augmented reality user interface, e.g. using AR-glasses to extend the FoV of the AR-HUD system. Both systems are connected/coupled and may share a model containing the ego-position, several states of the car/vehicle and the direction of the gaze of the driver. Using this information, content can be shared between those two displays. Even though augmented reality glasses may also have a limited FoV, the usable display space can be extended by motions and turning of the head. This may enable displaying information about navigation maneuvers, state of driver assistant systems, emergency warnings such as a pedestrian warning or information about the parking sensors independent of a FoV of the AR-HUD system. For example, an interface between the AR-glasses and the car/HUD is used to share an environmental model. For example, embodiments may overcome breaks in the AR-concept of a vehicle because limitations of FoVs could be prevented, compensated, or at least reduced. Embodiments may potentially provide a seemingly infinite FoV and enhance the general usability of an AR-HUD.

Embodiments may be applied to any vehicle that uses information projection. Examples for vehicles are car, trucks, vans, trains, etc. Another application is to use a visor of a helmet for the projection in addition of AR-glasses.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

### List of reference signs

- 10: method for controlling an augmented reality device and for visualizing of information for a driver of a vehicle
- 12: obtaining information on first information to be visualized by a visualization device
- 14: supplementing the first information to be visualized with second information to be visualized by the augmented reality device

- 20: method for controlling a visualization device and for visualizing information for a driver of a vehicle
- 22: obtaining first information to be visualized for the driver
- 24: providing information on the first information to be visualized for controlling an augment-ed reality device

- 30: apparatus
- 32: one or more interfaces
- 34: processing circuitry
- 300: visualization device, augmented reality device

- 410: car
- 420: artefact

- 510: truck
- 520: warning icon

- 610: pedestrian

- 612: warning circle
- 620: pedestrian
- 622: warning icon

- 710: first visualized information
- 720: second visualized information
- 730: navigational information
- 740: other information

## Claims

1. A method (10, 20) for controlling an augmented reality device (300) and a visualization device (300) and for visualizing information (710; 720) for a driver of a vehicle, wherein the augmented reality device (300) is an augmented reality glasses or a projector, and wherein the visualization device (300) is a head-up display, an augmented reality head-up display, or an additional projector, the method (10) being carried out in an apparatus (30) for the augmented reality device (300), the method (10) comprising:
obtaining (22) first information (710) to be visualized, by the visualization device (300), for the driver, the visualization device (300) being configured to project said first information onto a windshield/windscreen or any other surface in the vehicle;
providing (24) information on the first information (710) to be visualized, by the visualization device (300), for controlling the augmented reality device (300);
obtaining (12) the information on the first information (710);
supplementing (14) the first information (710) to be visualized with second information (720) to be visualized by the augmented reality device (300).

2. The method (10, 20) of claim 1, wherein the visualization device (300) has a first visualization field in which it is configured to visualize information and wherein the second information (720) to be visualized is configured to be visualized outside the first visualization field.

3. The method (10, 20) of one of the claims 1 or 2, wherein the supplementing (14) comprises configuring the second information (720) to fulfill a preconfigured geometrical relation to visualized first information.

4. The method (10, 20) of one of the claims 1 to 3, further comprising receiving information on a position of the augmented reality device (300) and wherein the supplementing (14) comprises adapting the second information (300) to be visualized based on the information on the position of the augmented reality device (300).

5. The method (10, 20) of one of the claims 1 to 4, further comprising determining information on a gaze of the user and adapting the first and/or or second information (720) to be visualized to the information on the gaze of the user.

6. The method (10, 20) of one of the claims 1 to 5, further comprising providing the second information (720) to be visualized to the visualization device (300).

7. The method (10, 20) of one of the claims 1 to 6, further comprising coordinating the first (710) and second information (720) to be visualized by controlling the augmented reality device and the visualization device.

8. The method (10, 20) of one of the claims 1 to 8, further comprising receiving information on the second information (720) to be visualized from controlling of the augmented reality device (300) and coordinating the first (710) and second information (720) to be visualized.

9. The method (20) of one of the claims 1 to 8, further comprising visualizing the first (710) and/or the second information (720) to be visualized.

10. A computer program having a program code for performing a method (10; 20) according to any one of claims 1 to 9, when the computer program is executed on a computer, a processor, or a programmable hardware component.

11. An apparatus (30), comprising:
one or more interfaces (32) configured to communicate with one or more visualization devices; and
processing circuitry (34) configured to control the one or more interfaces (32) and to perform a method (10; 20) according to any of claims 1 to 10.

12. An augmented reality device (300) comprising an apparatus (30) according to claim 11.

13. A head-up display (300) for a vehicle comprising an apparatus (30) according to claim 11.

14. A vehicle (300) comprising the apparatus (30) according to claim 11.

## Patentansprüche

1. Verfahren (10, 20) zum Steuern einer Augmented-Reality-Vorrichtung (300) und einer Visualisierungsvorrichtung (300) und zum Visualisieren von Informationen (710; 720) für einen Fahrzeugführer, wobei die Augmented-Reality-Vorrichtung (300) eine Augmented-Reality-Brille oder ein Projektor ist und wobei die Visualisierungsvorrichtung (300) ein Head-up-Display, ein Augmented-Reality-Head-up-Display oder ein zusätzlicher Projektor ist, wobei das Verfahren (10) in einer Einrichtung (30) für die Augmented-Reality-Vorrichtung (300) durchgeführt wird, das Verfahren (10) umfassend:
Erhalten (22) von ersten Informationen (710), die visualisiert werden sollen, durch die Visualisierungsvorrichtung (300), für den Fahrzeugführer, wobei die Visualisierungsvorrichtung (300) konfiguriert ist, um die ersten Informationen auf eine Windschutzscheibe/Frontscheibe oder eine andere Oberfläche in dem Fahrzeug zu projizieren;
Bereitstellen (24) von Informationen über die ersten Informationen (710), die visualisiert werden sollen, durch die Visualisierungsvorrichtung (300), zum Steuern der Augmented-Reality-Vorrichtung (300);
Erhalten (12) der Informationen über die ersten Informationen (710);
Ergänzen (14) der ersten Informationen (710), die visualisiert werden sollen, mit zweiten Informationen (720), die visualisiert werden sollen, durch die Augmented-Reality-Vorrichtung (300).

2. Verfahren (10, 20) nach Anspruch 1, wobei die Visualisierungsvorrichtung (300) ein erstes Visualisierungsfeld aufweist, in dem sie konfiguriert ist, um Informationen zu visualisieren, und wobei die zweiten Informationen (720), die visualisiert werden sollen, konfiguriert sind, um außerhalb des ersten Visualisierungsfelds visualisiert zu werden.

3. Verfahren (10, 20) nach einem der Ansprüche 1 oder 2, wobei das Ergänzen (14) das Konfigurieren der zweiten Informationen (720) umfasst, um eine vorkonfigurierte geometrische Beziehung zu visualisierten ersten Information zu erfüllen.

4. Verfahren (10, 20) nach einem der Ansprüche 1 bis 3, ferner umfassend ein Empfangen von Informationen über eine Position der Augmented-Reality-Vorrichtung (300) und wobei das Ergänzen (14) ein Anpassen der zweiten Informationen (300), die visualisiert werden sollen, basierend auf den Informationen über die Position der Augmented-Reality-Vorrichtung (300) umfasst.

5. Verfahren (10, 20) nach einem der Ansprüche 1 bis 4, ferner umfassend ein Bestimmen von Informationen über einen Blick des Benutzers und das Anpassen der ersten und/oder der zweiten Informationen (720), die visualisiert werden sollen, an die Informationen über den Blick des Benutzers.

6. Verfahren (10, 20) nach einem der Ansprüche 1 bis 5, ferner umfassend das Bereitstellen der zweiten Informationen (720), die visualisiert werden sollen, an die Visualisierungsvorrichtung (300).

7. Verfahren (10, 20) nach einem der Ansprüche 1 bis 6, ferner umfassend ein Koordinieren der ersten (710) und der zweiten Informationen (720), die visualisiert werden sollen, durch Steuern der Augmented-Reality-Vorrichtung und der Visualisierungsvorrichtung.

8. Verfahren (10, 20) nach einem der Ansprüche 1 bis 8, ferner umfassend das Empfangen von Informationen über die zweiten Informationen (720), die visualisiert werden sollen, durch Steuern der Augmented-Reality-Vorrichtung (300) und das Koordinieren der ersten (710) und der zweiten Informationen (720), die visualisiert werden sollen.

9. Verfahren (20) nach einem der Ansprüche 1 bis 8, ferner umfassend das Visualisieren der ersten (710) und/oder der zweiten Informationen (720), die visualisiert werden sollen.

10. Computerprogramm, das einen Programmcode zum Ausführen eines Verfahrens (10, 20) nach einem der Ansprüche 1 bis 9 aufweist, wenn das Computerprogramm auf einem Computer, einem Prozessor oder einer programmierbaren Hardwarekomponente ablaufen gelassen wird.

11. Einrichtung (30), umfassend:
eine oder mehrere Schnittstellen (32), die konfiguriert sind, um mit einer oder mehreren Visualisierungsvorrichtungen zu kommunizieren; und
eine Verarbeitungsschaltung (34), die konfiguriert ist, um die eine oder die mehreren Schnittstellen (32) zu steuern und um ein Verfahren (10, 20) nach einem der Ansprüche 1 bis 10 auszuführen.

12. Augmented-Reality-Vorrichtung (300), umfassend eine Einrichtung (30) nach Anspruch 11.

13. Head-up-Display (300) für ein Fahrzeug, umfassend eine Einrichtung (30) nach Anspruch 11.

14. Fahrzeug (300), umfassend die Einrichtung (30) nach Anspruch 11.

## Revendications

1. Procédé (10, 20) de commande d'un dispositif de réalité augmentée (300) et d'un dispositif de visualisation (300) et de visualisation d'informations (710 ; 720) pour un conducteur d'un véhicule, dans lequel le dispositif de réalité augmentée (300) est constitué de lunettes de réalité augmentée ou d'un projecteur, et dans lequel le dispositif de visualisation (300) est un affichage tête haute, un affichage tête haute à réalité augmentée ou un projecteur supplémentaire, le procédé (10) étant mis en œuvre dans un appareil (30) pour le dispositif de réalité augmentée (300), le procédé (10) comprenant :
l'obtention (22) de premières informations (710) à visualiser, par le dispositif de visualisation (300),
pour le conducteur, le dispositif de visualisation (300) étant configuré pour projeter lesdites premières informations sur un pare-brise ou une quelconque autre surface dans le véhicule ;
la fourniture (24) d'informations sur les premières informations (710) à visualiser, par le dispositif de visualisation (300), pour commander le dispositif de réalité augmentée (300) ;
l'obtention (12) des informations sur les premières informations (710) ;
le complément (14) des premières informations (710) à visualiser par des secondes informations (720) à visualiser par le dispositif de réalité augmentée (300).

2. Procédé (10, 20) selon la revendication 1, dans lequel le dispositif de visualisation (300) a un premier champ de visualisation dans lequel il est configuré pour visualiser des informations et dans lequel les secondes informations (720) à visualiser sont configurées pour être visualisées en dehors du premier champ de visualisation.

3. Procédé (10, 20) selon l'une des revendications 1 ou 2, dans lequel le complément (14) comprend la configuration des secondes informations (720) pour qu'elles remplissent une relation géométrique préconfigurée avec les premières informations visualisées.

4. Procédé (10, 20) selon l'une des revendications 1 à 3, comprenant en outre la réception d'informations sur une position du dispositif de réalité augmentée (300) et dans lequel le complément (14) comprend l'adaptation des secondes informations (300) à visualiser en fonction des informations sur la position du dispositif de réalité augmentée (300).

5. Procédé (10, 20) selon l'une des revendications 1 à 4, comprenant en outre la détermination d'informations sur un regard de l'utilisateur et l'adaptation des premières et/ou des secondes informations (720) à visualiser aux informations sur le regard de l'utilisateur.

6. Procédé (10, 20) selon l'une des revendications 1 à 5, comprenant en outre la fourniture des secondes informations (720) à visualiser au dispositif de visualisation (300).

7. Procédé (10, 20) selon l'une des revendications 1 à 6, comprenant en outre la coordination des premières (710) et des secondes informations (720) à visualiser par commande du dispositif de réalité augmentée et du dispositif de visualisation.

8. Procédé (10, 20) selon l'une des revendications 1 à 8, comprenant en outre la réception d'informations sur les secondes informations (720) à visualiser à partir de la commande du dispositif de réalité augmentée (300) et la coordination des premières (710) et des secondes informations (720) à visualiser.

9. Procédé (20) selon l'une des revendications 1 à 8, comprenant en outre la visualisation des premières (710) et/ou des secondes informations (720) à visualiser.

10. Programme d'ordinateur ayant un code de programme pour réaliser un procédé (10 ; 20) selon l'une quelconque des revendications 1 à 9, lorsque le programme d'ordinateur est exécuté sur un ordinateur, un processeur, ou un composant matériel programmable.

11. Appareil (30) comprenant :
une ou plusieurs interfaces (32) configurées pour communiquer avec un ou plusieurs dispositif de visualisation ; et
un ensemble de circuits de traitement (34) configuré pour commander les une ou plusieurs interfaces (32) et pour réaliser un procédé (10 ; 20) selon l'une quelconque des revendications 1 à 10.

12. Dispositif de réalité augmentée (300) comprenant un appareil (30) selon la revendication 11.

13. Affichage tête haute (300) pour un véhicule comprenant un appareil (30) selon la revendication 11.

14. Véhicule (300) comprenant l'appareil (30) selon la revendication 11.
